# EUROPÄISCHE PATENTSCHRIFT

(11) **EP 3 921 214 B1**
(45) Veröffentlichungstag und Bekanntmachung des Hinweises auf die Patenterteilung: **26.10.2022**
(21) Anmeldenummer: 20704467.8
(22) Anmeldetag: 04.02.2020
(51) Int. Cl.: B60W 60/00, B60W 50/14, B60W 50/08, B60W 30/165

(54) **VERFAHREN UND VORRICHTUNG ZUR UNTERSTÜTZUNG EINES FAHRERS EINES FAHRZEUGS**
METHOD AND DEVICE FOR SUPPORTING A DRIVER IN A VEHICLE
PROCÉDÉ ET DISPOSITIF D'ASSISTANCE À UN CONDUCTEUR D'UN VÉHICULE

(30) Priorität: 07.02.2019 DE 102019000899
(43) Veröffentlichungstag der Anmeldung: 15.12.2021
(73) Patentinhaber: Mercedes-Benz Group AG, 70372 Stuttgart (DE)
(72) Erfinder: GAENG, Christoph, 70597 Stuttgart (DE); HIRSCH, Maria, 70195 Stuttgart (DE)
(74) Vertreter: JENSEN & SON
(86) Internationale Anmeldenummer: PCT/EP2020/052756
(87) Internationale Veröffentlichungsnummer: WO 2020/161137

(56) Entgegenhaltungen:
- EP-A1- 3 351 418
- US-A1- 2014 156 133
- US-A1- 2016 159 280
- US-A1- 2017 243 504
- US-A1- 2018 024 354

## Beschreibung

Verfahren und Vorrichtung zur Unterstützung eines Fahrers eines Fahrzeugs Die Erfindung betrifft ein Verfahren und eine Vorrichtung zur Unterstützung eines Fahrers bei einer Aktivierung eines automatischen Fahrbetriebs eines Fahrzeugs.

Bekannt sind autonom fahrende Fahrzeug, wobei für einen autonomen Fahrbetrieb vorgegebene Bedingungen erfüllt sein müssen.

Aus der DE 10 2013 110 909 A1 ist eine Vorrichtung bekannt, die eingerichtet ist einen autonomen Fahrzustand eines Fahrzeugs zu erfassen und in dem automatischen Fahrzustand mehrere einzuhaltende Bedingungen für eine Aufrechterhaltung auf einer Anzeige darzustellen. Wird der automatische Fahrzustand gesperrt, dann werden dem Fahrer die nicht erfüllten Bedingungen angezeigt.

Gemäß dem Stand der Technik ist für einen Fahrer ersichtlich, welche Bedingungen bei Beendigung eines autonomen Fahrbetriebs nicht mehr erfüllt sind, er erhält jedoch keine Information darüber, wie die mit den nichterfüllten Bedingungen im Kontext stehenden Objekte in der Fahrzeugumgebung verortet sind.

Aus der US 2014/156133 A1 ist ein Verfahren bekannt, bei dem ein autonomes Fahrbetrieb erst aktiviert werden kann, wenn der Fahrer einen Satz von Aufgaben durchgeführt hat.

Die DE 10 2017 212 222 B3 offenbart ein Verfahren bei dem ein Sicherheitsindikator, der die Zuverlässigkeit des aktuell pilotierten Fahrmodus angibt. Mittels dem Sicherheitsindikator kann der Benutzer erkennen, wie zuverlässig das Fahrerassistenzsystem den pilotierten Fahrmodus durchführt.

Die DE 10 2017 130 936 A1 offenbart ein Verfahren zum Steuern eines autonomen Fahrzeugs bei dem ermittelt wird, ob zum Fortbewegen des autonomen Fahrzeug Hilfe von manuellen Anweisungen eines entfernten Benutzers erforderlich ist. Eine Bildschirmanzeige bildet ein Fahrzeug zusammen mit einem Hindernis und einem anfänglichen Weg ab. In einer Ausführungsform kann die Bildschirmanzeige einen überarbeiteten Weg für das Fahrzeug beinhalten.

Die US 2018/0 281 818 A1 offenbart ein Informationsausgabegerät, das einem Fahrzeugnutzer ein Fahrmanöver eines autonom fahrenden Fahrzeugs zur Auswahl anbietet. Dem Nutzer wird dabei angezeigt, wieviel Zeit zur Auswahl des Fahrmanövers verbleibt. Demgegenüber offenbart der Anspruch 1 eine Ermittlung und Kennzeichnung eines Objekts, das als Voraussetzung für den automatischen Fahrbetrieb im Kontext zu einer zu erfüllenden Bedingung steht.

Aus der DE 10 2013 110 852 A1 ist ein Fahrassistenzsystem bekannt, bei dem ein Beginn eines Autopilotstreckenabschnitts in einem für das Fahrzeug geplanten Streckenverlauf bestimmt wird. In der Ausgabe wird ein zukünftiger Streckenverlauf zu einem vorausfahrenden Fahrzeug angezeigt. Der Streckenverlauft teilt sich auf in einen ersten Anteil bis zum Anfang des Autopilotenstreckenabschnitts und ein zweiten, den Autopilotenstreckenabschnitt darstellenden Anteil.

Aufgabe der Erfindung ist es demgegenüber ein Verfahren und eine Vorrichtung bereitzustellen, mittels welchen ein leichter Wechsel von einem manuellen in einen autonomen Fahrbetrieb ermöglicht ist.

Die Aufgabe wird durch ein Verfahren mit den Merkmalen des Anspruchs 1 sowie eine Vorrichtung gemäß Anspruch 8 gelöst. Die abhängigen Ansprüche definieren bevorzugte und vorteilhafte Ausführungsformen der vorliegenden Erfindung.

Bei dem erfindungsgemäßen Verfahren wird eines zur Erfüllung einer nicht erfüllten Bedingung im Kontext stehenden Objekts in der Fahrzeugumgebung ermittelt und in einer Darstellung der Fahrzeugumgebung oder durch eine Projektion eine Graphik auf eine Windschutzscheibe gekennzeichnet, so dass dem Fahrer ein für eine Aktivierung eines autonomen Fahrbetriebs erforderliches Fahrtmanöver vermittelt wird.

Mit der Kennzeichnung des Objekts und einer grafischen Darstellung in einer Fahrzeugumgebung erhält der Fahrer einen Hinweis, in welcher Richtung das Objekt relativ zu seinem Fahrzeug liegt. Alternativ zur grafischen Darstellung erfolgt eine dem realen Objekt der Umgebung überlagerte Kennzeichnung auf der Windschutzscheibe mittels einem Projektor. Damit ist erkennbar, welches Fahrmanöver durchzuführen ist, um eine Freigabe eines autonomen Fahrbetriebs zu bewirken. Beispielsweise erkennt ein Fahrer, in welche Richtung er sein Fahrzeug lenken muss und ob er Beschleunigen oder Abbremsen muss, um zu erreichen, dass die Bedingung für das autonome Fahren erfüllt ist. Das gekennzeichnete Objekt steht damit im Kontext zu einer Bedingung, die der Fahrer durch aktive Veränderung der Fahrzeugposition von sich aus dahingehend beeinflussen kann, dass die Bedingung erfüllt oder nicht erfüllt ist. In einer zusätzlichen Ausführungsform wird ein Fahrtrichtungspfeil zu dem gekennzeichneten Objekt dargestellt. In einem aktivierten autonomen Fahrbetrieb fährt das Fahrzeug zumindest teilweise selbstständig. Eine Freigabe des autonomen Fahrbetriebs erfolgt, sobald alle Bedingungen erfüllt sind, die Aktivierung erfolgt entweder auf Aufforderung eines Nutzers oder automatisch. Die Darstellung der Fahrzeugumgebung umfassend das mit den nicht erfüllten Bedingungen im Kontext stehenden Objekts ist beispielsweise eine graphische Darstellung oder ein Videobild der Umgebung, welche beispielsweise auf einem Display wie dem Instrument Cluster oder einem Zentraldisplay dargestellt wird. In einer Alternative wird die Kennzeichnung beispielsweise mit einem Head-up Display auf die Windschutzscheibe projiziert und der realen Umgebung überlagert dargestellt. Die für den autonomen Fahrbetrieb erforderlichen Bedingungen werden aus einem Steuergerät ausgelesen oder über kabellose Verbindung wie beispielsweise WLAN oder Mobilfunk in das Fahrzeug übertragen. Die Ermittlung eines zu einer nicht erfüllten Bedingung im Kontext stehenden Objektes in der Fahrzeugumgebung erfolgt mit einer Umgebungssensorik wie beispielsweise einer Kamera, Radar oder Lidar.

Die Kennzeichnung kann beispielsweise eine farbliche Hervorhebung, ein Aufhellen, ein Animieren, ein Symbol, ein Richtungspfeil, ein Hinweis und/oder eine sonstige grafische Ergänzung zum Objekt umfassen.

Erfindungsgemäß umfasst das mit der zur Erfüllung der nicht erfüllten Bedingung im Kontext stehende Objekt ein in der Fahrzeugumgebung fahrendes, als Führungsfahrzeug geeignetes Fahrzeug. In einem ein Führungsfahrzeug erfordernden autonomen Fahrbetrieb muss ein Fahrer einem derartigen Fahrzeug aufschließen um den autonomen Fahrbetrieb aktivierbar zu machen, beziehungsweise eine Sperrung des autonomen Fahrbetriebs aufzuheben. Ein in der Umgebung des Fahrzeugs fahrendes, potentielles Führungsfahrzeug wird ermittelt und in einer Darstellung der Fahrzeugumgebung dargestellt und gekennzeichnet, alternativ wird auf einer Windschutzscheibe eine Kennzeichnung dem potentiellen Führungsfahrzeug überlagert dargestellt. In vorteilhafter Weise erhält der Fahrer eine Information, in welche Richtung er sein Fahrzeug lenken und wie weit er zu dem Führungsfahrzeug aufschließen muss, um einen autonomen Fahrbetrieb nutzen zu können. In weiteren zusätzlichen oder alternativen Ausführungsform des Verfahrens umfasst das mit der zur Erfüllung der nicht erfüllten Bedingungen im Kontext stehende Objekt ein für das autonome Fahren freigegebene Fahrspur. Je nach Land und gesetzlichen Bestimmungen kann für das autonome Fahren bestimmte Fahrspur vorgesehen sein. Fährt das Fahrzeug neben der für das autonome Fahren freigegebenen Fahrspur, so ist die Funktion des autonomen Fahrens gesperrt. Die freigegebene Fahrspur wird ermittelt und wiederum in einer Darstellung der Fahrzeugumgebung dargestellt und gekennzeichnet, alternativ wird auf einer Windschutzscheibe eine Kennzeichnung der freigegebenen Fahrspur überlagert dargestellt. Der Fahrzeugnutzer kann damit erkennen, in welche Richtung sein Fahrzeug zu lenken ist, um die Sperrung des autonomen Fahrbetriebs aufzuheben.

In einer modifizierten Ausführungsform werden die Bedingungen für das autonome Fahren standortabhängig bestimmt. Beispielsweise sind die Bedingungen für das autonome Fahren abhängig vom Land. Über den Standort wird bestimmt, welches Land von dem Fahrzeug befahren wird und welche Bestimmung vorgeschrieben ist. Damit ist in vorteilhafter Weise eine länderabhängige Ermittlung des mit der nicht erfüllten Bedingung im Kontext stehenden Objekts ermöglicht.

In weiterer Ausgestaltung des Verfahrens werden die Bedingungen zum autonomen Fahren kontinuierlich über einen Server abgefragt. Die Bedingungen hängen von den jeweiligen gesetzlichen und regionalen Bestimmungen ab und sind häufigen Änderungen unterworfen. Ein kontinuierliches Update der geltenden Bedingungen sichert einen zuverlässigen Betrieb des erfindungsgemäßen Verfahrens.

In weiterer Ausgestaltung der Erfindung werden die zu den nicht erfüllten Bedingungen im Kontext stehenden Objekte vor Anforderung einer Aktivierung eines autonomen Fahrbetriebs angezeigt. Beispielsweise kann sich ein Fahrer kontinuierlich die für einen autonomen Fahrbetrieb Objekte zu einer fehlenden Bedingung anzeigen lassen. Damit ist ermöglicht, das Fahrzeug in einen Fahrposition zu manövrieren, in der ein autonomer Fahrbetrieb freigegeben ist. Ist der autonome Fahrbetrieb freigegeben, kann ein Nutzer durch Anforderung autonomes Fahren aktivieren. In vorteilhafte Weise ist vermieden, dass eine Anforderung aufgrund nicht erfüllter Bedingungen gesperrt ist und dabei der Fahrer neben einer Ablehnung seiner Anforderung keinen Hinweis erhält, welches Manöver für eine Aufhebung der Sperrung auszuführen ist.

In einer weiteren Ausführungsform umfasst die grafische Darstellung ein reales Bild der Umgebung. Das reale Bild der Umgebung wird beispielsweise mit einer Kamera erfasst und einem Display dargestellt. In dem dargestellten realen Bild wird dem mit den nicht erfüllten Bedingungen im Kontext stehenden Objekt eine Kennzeichnung zugeordnet oder überlagert. In vorteilhafter Weise ermöglicht das reale Bild ein einfaches Erkennen des Objektes in der Umgebung.

In einer weiteren Ausgestaltung des Verfahrens wird in der Darstellung der Umgebung das eigene Fahrzeug zumindest teilweise dargestellt wird. In vorteilhafter Weise kann ein Fahrer die Position des eigenen Fahrzeugs zu dem mit den nicht erfüllten Bedingungen im Kontext stehenden Objektes leichter zu erkennen.

Die erfindungsgemäße Vorrichtung umfasst eine Einrichtung, die ein mit einer zu einer nicht erfüllten Bedingung im Kontext stehendes Objekt in der Fahrzeugumgebung ermittelt und eine Anzeigeeinheit, die zur Vermittlung eines für eine Freigabe eines autonomen Fahrbetriebs erforderlichen Fahrmanövers ein mit den nicht erfüllten Bedingungen im Kontext stehendes Objekt in einer Darstellung der Fahrzeugumgebung oder durch Projektion auf eine Windschutzscheibe kennzeichnet. In vorteilhafter Weise kann ein Fahrer leicht erkennen, in welche Richtung er sein Fahrzeug lenken muss um eine Freigabe des autonomen Fahrens zu bewirken.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Beschriebene und/oder bildlich dargestellte Merkmale können für sich oder in beliebiger, sinnvoller Kombination den Gegenstand der Erfindung bilden, gegebenenfalls auch unabhängig von den Ansprüchen, und können insbesondere zusätzlich auch Gegenstand einer oder mehrerer separater Anmeldung/en sein. Gleiche, ähnliche und/oder funktionsgleiche Teile sind mit gleichen Bezugszeichen versehen.

Dabei zeigen:
- Fig. 1: Fahrzeug mit einer erfindungsgemäßen Vorrichtung,
- Fig. 2: Darstellung einer Fahrzeugumgebung und Kennzeichnung eines mit nicht erfüllten Bedingung für autonomes Fahren im Kontext stehenden Objekts,
- Fig. 3: weitere Darstellung einer Fahrzeugumgebung und Kennzeichnung eines weiteren mit nicht erfüllten Bedingung für autonomes Fahren im Kontext stehenden Objekts und
- Fig. 4: Ablaufdiagramm zur Aktivierung eines automatischen Fahrbetriebs.

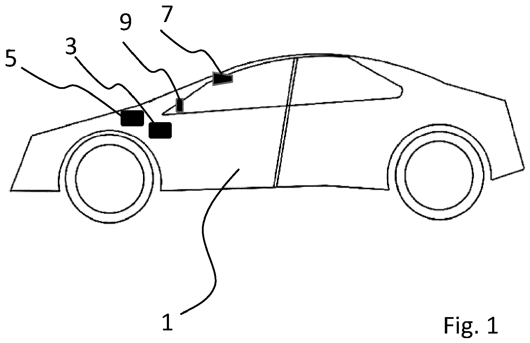

Fig.1 zeigt ein Fahrzeug 1 eingerichtet zur Durchführung des erfindungsgemäßen Verfahrens. Das Fahrzeug umfasst eine Recheneinheit 3 zur Bestimmung der für einen autonomen Fahrbetrieb erforderlichen Bedingungen. Eine Einrichtung 5 bestimmt die für einen autonomen Fahrbetrieb nicht erfüllten Bedingungen. Hierzu liefert eine Fahrzeugsensorik wie beispielsweise eine Kamera 7 Informationen an die Einrichtung 5 über die Umgebung des Fahrzeugs 1. Aus den Informationen der Kamera ermittelt die Einrichtung 5 Objekte der Umgebung, die zu den nicht erfüllten Bedingungen im Kontext stehen. Auf einer Anzeigeeinheit 9 werden einem Fahrer diese Objekte in einer Assistenzgrafik angezeigt und gekennzeichnet. Die Einrichtung zur Bestimmung von im aktuellen Fahrzustand nicht erfüllten Bedingungen und die Einrichtung zur Bestimmung der zu nicht erfüllten Bedingungen im Kontext stehenden Objekte in der Fahrzeugumgebung können in einem Steuergerät integriert oder auf mehrere Steuergeräte verteilt sein.

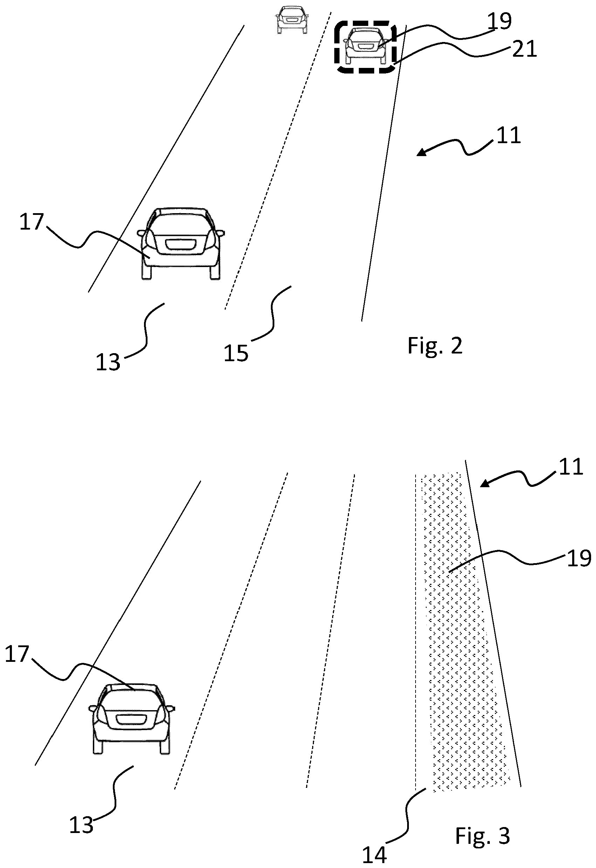

Fig. 2 zeigt eine Assistenzgrafik einer auf der Anzeigeeinheit 9 gezeigten Darstellung. Die Darstellung umfasst eine Fahrzeugumgebung 11 des eigenen Fahrzeugs. Die Fahrzeugumgebung beinhaltet eine vorausliegende Fahrstrecke mit einer ersten und zweiten Fahrspur 13, 15.

Die Darstellung umfasst weiter ein Bild des eigenen Fahrzeugs 17 und ein in der Fahrzeugumgebung fahrendes weiteres, als Führungsfahrzeug für einen autonomen Fahrbetrieb geeignetes Fahrzeug 19. Die Eignung des Fahrzeugs 19 als Führungsfahrzeug wird durch die Kennzeichnung 21 angezeigt. Mittels der Darstellung kann der Fahrer des eigenen Fahrzeugs die relative Position seines Fahrzeugs zu einem potentiellen Führungsfahrzeug erkennen und ein Fahrmanöver einleiten, das eine Freischaltung des autonomen Fahrbetriebs bewirkt. Das erforderliche Fahrmanöver beinhaltet ein Wechsel auf die Fahrspur und ein Aufschließen an das Fahrzeug 19.

Die Fig. 3 zeigt die Assistenzgrafik mit einer weiteren Darstellung, die eine vorausliegende mehrspurige Fahrstrecke umfasst. Das eigene, in der Assistenzgrafik als Bild dargestellte Fahrzeug 17 befährt die linke Spur 13. Für einen autonomen Fahrbetrieb ist allerdings nur die Spur 14 freigegeben, dementsprechend ist der autonome Fahrbetrieb im eigenen Fahrzeug gesperrt und wird trotz Anforderung durch den Fahrer nicht aktiviert. Dem Fahrer wird das im Kontext zu der nicht erfüllten Bedingung stehende Objekt, d.h. die für autonomen Fahrbetrieb freigegebene Fahrspur, durch eine als eine Schraffur ausgeführte Kennzeichnung 19 angezeigt. Die Kennzeichnung zeigt dem Fahrer an, welches Fahrmanöver durchzuführen ist um ein eine Freischaltung des autonomen Fahrbetriebs zu bewirken. Das Manöver beinhaltet einen Wechsel von der Fahrspur 13 auf die Fahrspur 14.

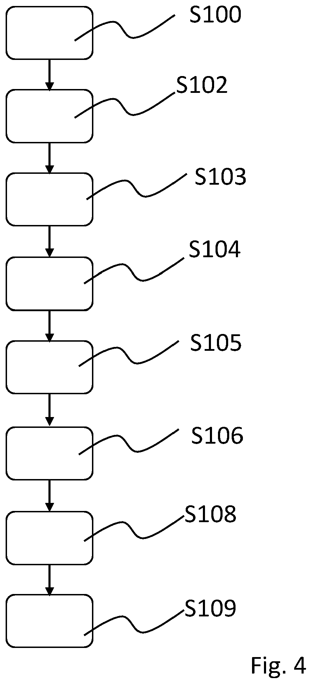

Fig. 4 zeigt ein Ablaufdiagramm zur Aktivierung eines automatischen Fahrbetriebs. Im Schritt S100 fährt ein Fahrzeug im manuellen Betrieb. Mit dem Wunsch autonom Fahren zu können fordert der Fahrer im Schritt S102 die Anzeige einer Assistenzgrafik an. Die beispielsweise eine der Figuren 2 und 3 entsprechende Assistenzgrafik wird auf eine Anzeigevorrichtung 9 im Fahrzeug angezeigt.

Mit Anforderung der Assistenzgrafik werden die erforderlichen und die einen autonomen Fahrbetrieb sperrenden Bedingungen ermittelt, S103. Im Schritt S104 wird ein zu der nicht erfüllten Bedingung im Kontext stehende Objekt in der Fahrzeugumgebung bestimmt.

Gemäß Schritt S105 wird das der nicht erfüllten Bedingung im Kontext stehende Objekt in einer Darstellung der Fahrzeugumgebung oder durch Projektion einer dem Objekt überlagerten oder zugeordneten Information auf eine Windschutzscheibe gekennzeichnet.

Aus der Darstellung in der Anzeigevorrichtung oder der projizierten Information sind bereits im manuellen Fahrbetrieb, die nicht erfüllten Bedingungen zum autonomen Fahren sowie die mit den Bedingungen im Kontext stehenden Objekte ersichtlich. Aus der Kennzeichnung der Objekte kann ein Fahrer in logischer Weise erkennen, welches Fahrmanöver durchzuführen ist, um eine Freigabe des autonomen Fahrens zu bewirken. Die Kennzeichnung kann bereits eine bloße Darstellung des Objekts, eine Hervorhebung und/oder einen Hinweis beispielsweise als Bild oder in Textform zu dem Objekt beziehungsweise zu der mit dem Objekt im Kontext stehenden Bedingung umfassen. In Ergänzung kann als weitere Unterstützung eine Fahrtrichtungsempfehlung wie beispielsweise eine Trajektorie zu dem Objekt angezeigt werden.

Im Schritt 106 führt der Fahrer ein mit dem Objekt in Zusammenhang stehendes Fahrmanöver, d.h. er wechselt beispielsweise auf die für den autonomen Fahrbetrieb zugelassene Fahrspur 14. Die Assistenzgrafik zeigt dann in Abweichung von Fig. 2 das eigene Fahrzeug auf der Fahrspur 14 fahrend. Mit dem befahren der Fahrspur 14 ist der autonome Fahrbetrieb fahrzeugseitig freigeschaltet, d.h. auf Anforderung des Nutzers aktivierbar.

In Schritt 108 fordert der Nutzer beispielsweise durch Drücken einer Taste den autonomen Fahrbetrieb an. Da nunmehr alle Bedingungen erfüllt sind, nimmt das Fahrzeug im Schritt S109 einen autonomen Fahrbetrieb auf.

## Patentansprüche

1. Verfahren zur Unterstützung eines Fahrers bei einer Aktivierung eines automatischen Fahrbetriebs eines Fahrzeugs das folgende Schritte aufweist:
- Ermitteln der für einen autonomen Fahrbetrieb erforderlichen Bedingungen (S103)
- Bestimmung von im aktuellen Fahrzustand nicht erfüllten Bedingung, die eine Aktivierung des autonomen Fahrbetriebs sperren (S103),
**gekennzeichnet, durch**
- Ermitteln eines mit einer zu einer Erfüllung der nicht erfüllten Bedingung im Kontext stehenden Objekts in der Fahrzeugumgebung (S104),
- Kennzeichnung des Objekts in einer Darstellung der Fahrzeugumgebung oder durch Projektion auf eine Windschutzscheibe (S105),
so dass dem Fahrer ein für eine Freigabe eines autonomen Fahrbetriebs erforderliches Fahrmanöver vermittelt wird, wobei das mit der zur Erfüllung der nicht erfüllten Bedingungen im Kontext stehende Objekt ein in der Fahrzeugumgebung fahrendes, als Führungsfahrzeug geeignetes Fahrzeug (19) umfasst.

2. Verfahren nach Anspruch 1,
**dadurch gekennzeichnet, dass**
das mit der zur Erfüllung der nicht erfüllten Bedingungen im Kontext stehende Objekt eine für das autonome Fahren freigegebene Fahrspur (14) umfasst.

3. Verfahren nach einem der Ansprüche 1 oder 2,
**dadurch gekennzeichnet, dass**
die Bedingungen zum autonomen Fahren standortabhängig bestimmt werden.

4. Verfahren nach einem der Ansprüche 1 bis 3,
**dadurch gekennzeichnet, dass**
die Bedingungen zum autonomen Fahren kontinuierlich über einen Server abgefragt werden.

5. Verfahren nach einem der Ansprüche 1 bis 4,
**dadurch gekennzeichnet, dass**
das mit der zur Erfüllung der nicht erfüllten Bedingungen im Kontext stehende Objekt vor Anforderung einer Aktivierung eines autonomen Fahrbetriebs angezeigt wird.

6. Verfahren nach einem der Ansprüche 1 bis 5,
**dadurch gekennzeichnet, dass**
die grafische Darstellung ein reales Bild der Umgebung umfasst.

7. Verfahren nach einem der Ansprüche 1 bis 6,
**dadurch gekennzeichnet, dass**
in der Darstellung der Umgebung das eigene Fahrzeug (17) zumindest teilweise dargestellt wird.

8. Vorrichtung zur Ausführung des vorangehenden Verfahrens zur Unterstützung eines Fahrers bei einer Aktivierung eines automatischen Fahrbetriebs mit:
- Mittel (3) zur Bestimmung der für einen autonomen Fahrbetrieb erforderlichen Bedingungen,
- einer Einrichtung (5, 7) zur Bestimmung von im aktuellen Fahrzustand nicht erfüllten Bedingungen, die eine Aktivierung des autonomen Fahrbetriebs sperren,
**dadurch gekennzeichnet, dass**
die Einrichtung (5, 7), ein mit zur Erfüllung der nicht erfüllten Bedingungen im Kontext stehendes Objekt in der Fahrzeugumgebung ermittelt und
zur Vermittlung eines für eine Freigabe eines autonomen Fahrbetriebs erforderlichen Fahrmanövers eine Anzeigeeinheit (9), das Objekt (14, 19) in einer Darstellung der Fahrzeugumgebung oder durch Projektion auf eine Windschutzscheibe kennzeichnet, wobei das mit der zur Erfüllung der nicht erfüllten Bedingungen im Kontext stehende Objekt ein in der Fahrzeugumgebung fahrendes, als Führungsfahrzeug geeignetes Fahrzeug (19) umfasst.

## Claims

1. Method for supporting a driver in an activation of an automatic driving mode of a vehicle, the method having the following steps:
- determining the conditions required for an automatic driving mode (S103),
- determining conditions not met in the current driving state, which block an activation of the automatic driving mode (S103),
**characterised by**
- determining an object in the vehicle environment which is in context with meeting the conditions that have not been met (S104),
- indicating the object in a depiction of the vehicle environment or by projection onto a windscreen (S105),
so that a driving manoeuvre required for an autonomous driving mode is communicated to the driver, wherein the object in context with meeting the conditions that have not been met comprises a vehicle (19) travelling in the vehicle environment and suitable as a leading vehicle.

2. Method according to claim 1,
**characterised in that**
the object in context with meeting the conditions that have not been met comprises a lane (14) cleared for autonomous driving.

3. Method according to claim 1 or 2,
**characterised in that**
the conditions for autonomous driving are determined in a location-dependent manner.

4. Method according to any of claims 1 to 3,
**characterised in that**
the conditions for autonomous driving are continuously scanned via a server.

5. Method according to any of claims 1 to 4,
**characterised in that**
the object in context with meeting the conditions that have not been met is indicated before requesting an activation of an autonomous driving mode.

6. Method according to any of claims 1 to 5,
**characterised in that**
the graphic representation comprises a real image of the environment.

7. Method according to any of claims 1 to 6,
**characterised in that**
in the depiction of the environment the own vehicle (17) is shown at least partially.

8. Device for carrying out the above method for supporting a driver in an activation of an automatic driving mode, the device having:
- means (3) for determining the conditions required for an automatic driving mode,
- a device (5, 7) for determining conditions not met in the current driving state, which block an activation of the automatic driving mode,
**characterised in that**
the device (5, 7) determines an object in the vehicle environment which is in context with meeting the conditions that have not been met and
**in that**, in order to communicate a driving manoeuvre required for an autonomous driving mode, a display unit (9) indicates the object (14, 19) in a depiction of the vehicle environment or by projection onto a windscreen, wherein the object in context with meeting the conditions that have not been met comprises a vehicle (19) travelling in the vehicle environment and suitable as a leading vehicle.

## Revendications

1. Procédé destiné à assister un conducteur lors d'une activation d'un fonctionnement de véhicule automatique d'un véhicule, l'étape suivante consistant à :
- établir des conditions nécessaires (S103) à un fonctionnement de conduite autonome
- déterminer la condition non remplie dans l'état de conduit en cours qui bloque une activation du fonctionnement de conduite autonome (S103),
**caractérisé par**
- l'établissement d'un objet se trouvant dans le contexte dans l'environnement du véhicule (S104) avec l'une des condition non remplie
- la signalisation de l'objet dans une représentation de l'environnement du véhicule ou par projection sur un pare-brise (S105),
de manière à ce qu'il soit transmis au conducteur une manœuvre nécessaire pour une libération d'un fonctionnement de conduite autonome, dans lequel l'objet se trouvant dans le contexte avec les conditions non remplies devant être remplies comprend un véhicule (19) se déplaçant dans l'environnement du véhicule conçu pour être un véhicule de guidage.

2. Procédé selon la revendication 1,
**caractérisé en ce que** l'objet se trouvant dans le contexte avec les conditions non remplies devant être remplies comprend une voie de circulation (14) libérée pour la conduite autonome.

3. Procédé selon l'une quelconque des revendications 1 ou 2, **caractérisé en ce que** les conditions pour une conduite autonome sont déterminées en fonction de l'emplacement.

4. Procédé selon l'une quelconque des revendications 1 à 3, **caractérisé en ce que** les conditions pour une conduite autonome sont extraites en continu à partir d'un serveur.

5. Procédé selon l'une quelconque des revendications 1 à 4, **caractérisé en ce que** l'objet se trouvant dans le contexte avec les conditions non remplies devant être remplies est affiché avant la demande d'une activation d'un fonctionnement de conduite autonome.

6. Procédé selon l'une quelconque des revendications 1 à 5, **caractérisé en ce que** la représentation graphique comprend une image réelle de l'environnement.

7. Procédé selon l'une quelconque des revendications 1 à 6, **caractérisé en ce que** le véhicule (17) en lui-même est représenté au moins en partie dans la représentation de l'environnement.

8. Dispositif destiné à exécuter le procédé précédent pour assister un conducteur lors d'une activation d'un fonctionnement de conduite autonome avec :
- un moyen (3) destiné à déterminer les conditions nécessaires à un fonctionnement de conduite autonome,
- un dispositif (5, 7) destiné à déterminer à partir des conditions non remplies dans l'état de conduit en cours, qui bloquent une activation du fonctionnement de conduite autonome,
**caractérisé en ce que**
le dispositif (5, 7), détermine un objet se trouvant dans le contexte avec les conditions non remplies devant être remplies et pour déterminer une manœuvre de conduite nécessaire pour une libération d'un fonctionnement de conduite autonome, une unité d'affichage (9) signale l'objet (14, 19) dans une représentation de l'environnement de véhicule ou par projection sur un pare-brise, l'objet se trouvant dans le contexte avec les conditions non remplies devant être remplies comprenant un véhicule (19) se déplaçant dans l'environnement de véhicule conçu pour être un véhicule de guidage.
